# EUROPEAN PATENT SPECIFICATION

(11) **EP 4 417 631 B1**
(45) Date of publication and mention of the grant of the patent: **28.10.2026**
(21) Application number: 22880630.3
(22) Date of filing: 16.08.2022
(51) Int. Cl.: C08F 30/08, C08F 290/14, G02C 7/04, C08K 5/101, C08K 5/134

(54) **POLYSILOXANE COMPOUND AND METHOD FOR PRODUCING SAME**
POLYSILOXANVERBINDUNG UND VERFAHREN ZUR HERSTELLUNG DAVON
COMPOSÉ POLYSILOXANE, ET PROCÉDÉ DE FABRICATION DE CELUI-CI

(30) Priority: 14.10.2021 JP 2021168649
(43) Date of publication of application: 21.08.2024
(73) Proprietor: SHIN-ETSU CHEMICAL CO., LTD., Tokyo 1000005 (JP)
(72) Inventor: OKAMURA, Kaoru, Annaka-shi, Gunma 379-0224 (JP)
(74) Representative: Sonnenhauser, Thomas Martin
(86) International application number: PCT/JP2022/030943
(87) International publication number: WO 2023/062933

(56) References cited:
- WO-A1-2017/188309
- JP-A- 2016 218 202
- JP-A- 2017 156 649
- JP-A- 2020 200 365
- JP-A- 2020 200 365
- JP-A- 2021 088 689
- JP-A- 2021 088 689
- JP-A- H0 311 025

## Description

### TECHNICAL FIELD

The present invention relates to a polysiloxane compound and a method for manufacturing the same.

### BACKGROUND ART

Conventionally, monomers with siloxane have been known as a compound used for medical materials such as ophthalmic devices. For example, 3-[tris(trimethylsiloxy)silyl]propyl methacrylate (TRIS) is widely used as a monomer for ophthalmic devices. Polymers obtained by copolymerization of the above TRIS and N,N-dimethylacrylamide or N-vinyl-2-pyrrolidone being a hydrophilic monomers have the beneficial feature of high oxygen permeability. However, the highly hydrophobic siloxane monomers are not highly compatible with these hydrophilic monomers, and it causes a problem resulting in phase separation and cloudiness when the hydrogel is prepared to be used as a medical material.

Patent Document 1 discloses a siloxane having glycerol methacrylate represented by the following formulae (a) and (a').

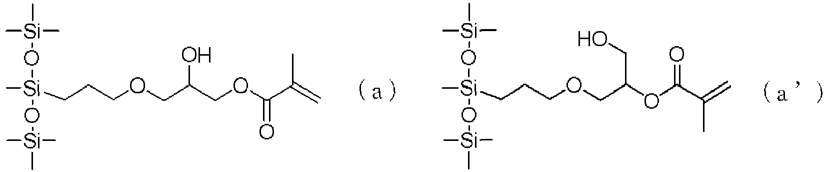

Further, Patent Document 2 discloses a siloxane having glycerol methacrylate represented by the following formulae (b) and (b').

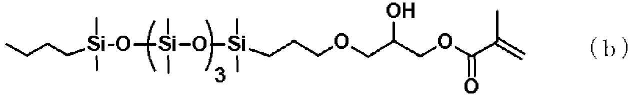

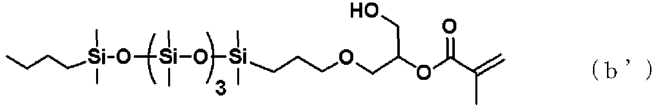

Furthermore, Patent Document 3 discloses a siloxane having alicyclic methacrylate represented by the following formula (c).

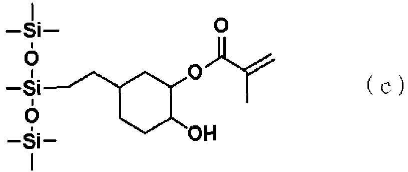

These compounds exhibit good hydrophilicity because they have a hydroxyl group in their molecules. Therefore, it has the advantage of excellent compatibility with a hydrophilic monomer.

JP2021088689 A discloses the preparation of a polysiloxane compound bearing a cycloaliphatic hydrocarbon group which is substituted with a (meth)acryloxy group and a secondary hydroxyl group.

However, when producing a hydrogel with a compound having a primary hydroxyl group or a secondary hydroxyl group in a linking group between the (poly)siloxane as described above and a polymerizable group, it is possible that these highly reactive hydroxyl groups cause undesirable results. For example, there is a risk where a radical may be added to the hydroxyl group, and a crosslinked structure due to the hydroxyl radical may be formed. This causes an unexpected increase in hardness or an unexpected decrease in flexibility. Therefore, conventional siloxane compounds cannot provide medical materials having useful hydrophilic properties or sufficient strength. Therefore, there remains still demand for compounds and compositions that can overcome these drawbacks.

### CITATION LIST

### PATENT LITERATURE

Patent Document 1: JP 2005-170827 A
Patent Document 2: JP 2013-231046 A
Patent Document 3: JP 2018-510946 A

### SUMMARY OF INVENTION

### TECHNICAL PROBLEM

An object of the present invention is to provide a polysiloxane compound suitable for medical materials and a method for manufacturing the same.

### SOLUTION TO PROBLEM

In order to solve the above problems, the present invention provides a polysiloxane compound including a single cycloaliphatic hydrocarbon group having 8 to 20 carbon atoms per molecule, wherein the polysiloxane compound has a (meth)acryloxy group and a tertiary hydroxyl group on an aliphatic ring of the cycloaliphatic hydrocarbon group.

Such polysiloxane compound can be suitably used as a medical material.

In the present invention, the polysiloxane compound is preferably represented by the following formula (1).

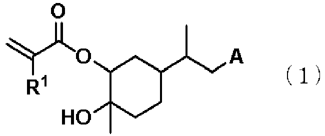

In the formula (1), R¹ represents a methyl group or a hydrogen atom, and "A" represents a group represented by the following formula (2) or (3).

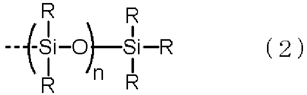

In the formula (2), R's each independently represent a monovalent hydrocarbon group having 1 to 6 carbon atoms, "n" represents an integer of 1 to 200, and a broken line represents an atomic bonding.

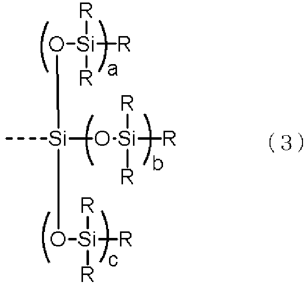

In the formula (3), R's represent as described above, "a" represents an integer of 0 to 10, "b" represents an integer of 0 to 10, "c" represents an integer of 0 to 10, a+b+c represents 2 or more, and a broken line represents an atomic bonding.

Such polysiloxane compound can be suitably used as a medical material.

In the present invention, it is preferable that "A" in the formula (1) is represented by the formula (2), and "n" in the formula (2) represents an integer of 4 to 100.

Such a polysiloxane compound can be more suitably used as a medical material.

In the present invention, it is also preferable that "A" in the formula (1) is represented by the formula (3), and in the formula (3), "a" represents 1, "b" represents 1, and "c" represents 0.

Such a polysiloxane compound can be further more suitably used as a medical material.

In the present invention, R¹ in the formula (1) preferably represents a methyl group.

The inventive polysiloxane is preferably such a compound.

In the present invention, R's in the formula (2) or (3) each independently preferably represent a methyl group or a butyl group.

The inventive polysiloxane is more preferably such a compound.

The present invention provides a polymer including a repeating unit derived from polymerization of a (meth)acryloxy group contained in the polysiloxane compound described above.

Such a polymer has good compatibility with other compounds having a polymerizable group such as a (meth)acryloxy group.

In this event, a mass ratio of the repeating unit to the total mass of the polymers is preferably 10 mass% or more.

Such a polymer makes it easier for a polysiloxane compound to exhibit its properties.

The present invention provides a hydrogel or a medical material including the polymer described above.

The inventive polymer can be used suitably for such uses.

The present invention provides a method for manufacturing a polysiloxane compound represented by the following formula (1).

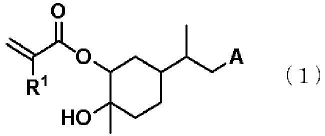

In the formula (1), R¹ represents a methyl group or a hydrogen atom, and "A" represents a group represented by the following formula (2) or (3).

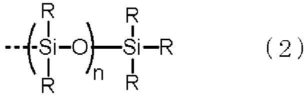

In the formula (2), R's each independently represent a monovalent hydrocarbon group having 1 to 6 carbon atoms, "n" represents an integer of 1 to 200, and a broken line represents an atomic bonding.

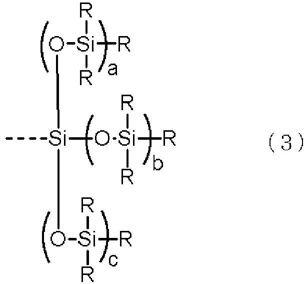

In the formula (3), R's represent as described above, "a" represents an integer of 0 to 10, "b" represents an integer of 0 to 10, "c" represents an integer of 0 to 10, a+b+c represents 2 or more, and a broken line represents an atomic bonding.

The inventive method for manufacturing the polysiloxane compound includes a step of obtaining the polysiloxane compound represented by the formula (1) by a hydrosilylation of a compound represented by the following formula (4) having an unsaturated group at the terminal, and a hydrogensiloxane compound represented by the following formula (5) or (6).

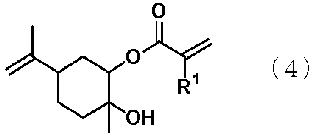

R¹ represents as described above.

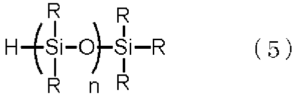

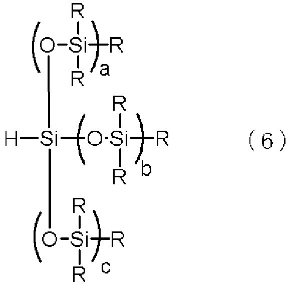

R, "n", "a", "b", and "c" represent as described above.

Such a manufacturing method for the polysiloxane compound makes it possible to obtain a polysiloxane compound with high purity.

### ADVANTAGEOUS EFFECTS OF INVENTION

Because the inventive polysiloxane compound has a cycloaliphatic hydrocarbon group substituted with a tertiary hydroxyl group, it has excellent compatibility with a hydrophilic monomer and does not cause an unexpected increase in hardness nor an unexpected decrease in flexibility when used as a medical material. Furthermore, the (co)polymer containing a repeating unit derived from polymerization of a (meth)acryloxy group of the inventive polysiloxane compound has preferable strength. The inventive polysiloxane compound is useful as a monomer for a medical material.

### DESCRIPTION OF EMBODIMENTS

As described above, it has been desired to develop a polysiloxane compound suitable for a medical material and a method for manufacturing the polysiloxane compound.

As a result of the present inventor's diligent study to solve the above problems, he found that a polysiloxane compound having a cycloaliphatic hydrocarbon group substituted with a tertiary hydroxyl group has excellent compatibility with other hydrophilic monomers and that a (co)polymer of the (poly)siloxane compound and a hydrophilic monomer has excellent flexibility.

That is, the present invention relates to a polysiloxane compound which includes a single cycloaliphatic hydrocarbon group having 8 to 20 carbon atoms per molecule and has a (meth)acryloxy group and a tertiary hydroxyl group on an aliphatic ring of the cycloaliphatic hydrocarbon group, and especially relates to a polysiloxane compound represented by the following formula (1).

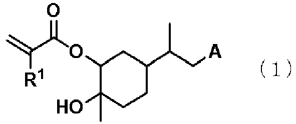

In the formula (1), R¹ represents a methyl group or a hydrogen atom, and "A" represents a group represented by the following formula (2) or (3).

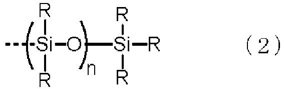

In the formula (2), R's each independently represent a monovalent hydrocarbon group having 1 to 6 carbon atoms, "n" represents an integer of 1 to 200, and a broken line represents an atomic bonding.

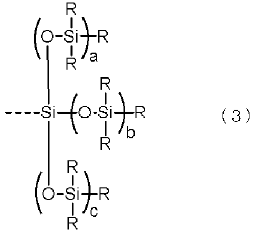

In the formula (3), R's represent as described above, "a" represents an integer of 0 to 10, "b" represents an integer of 0 to 10, "c" represents an integer of 0 to 10, a+b+c represents 2 or more, and a broken line represents an atomic bonding.

Furthermore, the present invention provides a method for manufacturing the polysiloxane compound, a polymer including a repeating unit derived from the compound, and a medical material, especially an ophthalmic device, including the polymer.

Hereinafter, the present invention is described in detail, but does not limit thereto.

### Polysiloxane Compound

The present invention relates to a polysiloxane compound which includes a single cycloaliphatic hydrocarbon group having 8 to 20 carbon atoms per molecule and has a (meth)acryloxy group and a tertiary hydroxyl group on an aliphatic ring of the cycloaliphatic hydrocarbon group.

A group having a (meth)acryloxy group and a tertiary hydroxyl group on an aliphatic ring of the cycloaliphatic hydrocarbon group is not particularly limited as long as it has 8 to 20 carbon atoms, but is preferably a cycloaliphatic hydrocarbon group as shown by the following formulae.

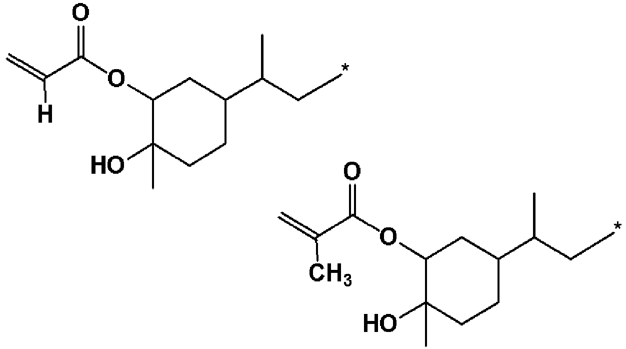

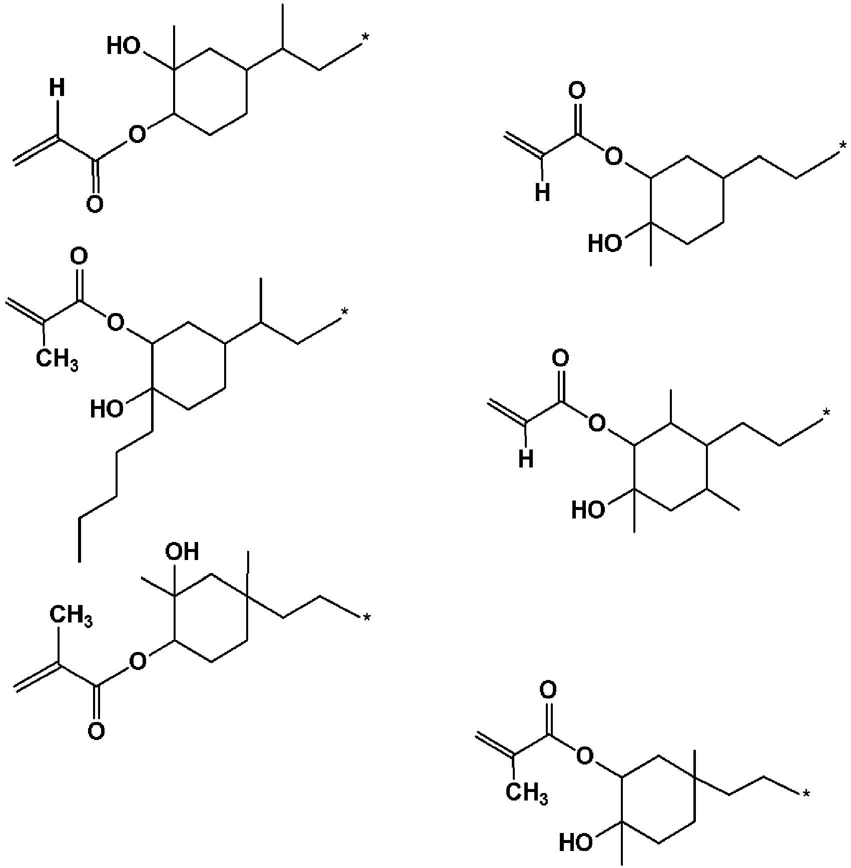

In the above formulae, * represents a free radical to be connected to a silicon atom of a polysiloxane.

The polysiloxane compound is preferably represented by the following formula (1), especially.

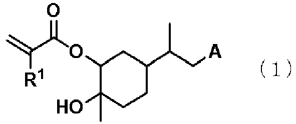

In the formula (1), R¹ represents a methyl group or a hydrogen atom, and "A" represents a group represented by the following formula (2) or (3).

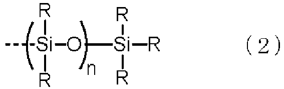

In the formula (2), R's each independently represent a monovalent hydrocarbon group having 1 to 6 carbon atoms, "n" represents an integer of 1 to 200, and a broken line represents an atomic bonding.

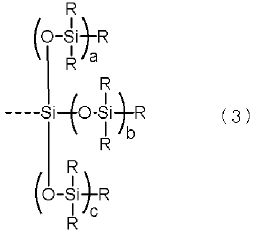

In the formula (3), R's represent as described above, "a" represents an integer of 0 to 10, "b" represents an integer of 0 to 10, "c" represents an integer of 0 to 10, a+b+c represents 2 or more, and a broken line represents an atomic bonding.

The compound is featured to have a polysiloxane structure and to include a cycloaliphatic hydrocarbon group in which a linking group between polysiloxane and a (meth)acryloxy group of a polymerizable group is substituted with a tertiary hydroxyl group. In the inventive polysiloxane compound, this tertiary hydroxyl group is a hydrophilic group, which is sterically restricted. This restriction suppresses a side reaction during the reaction, and in polymers ((co)polymers) containing a repeating unit derived from the polymerization of the (meth)acryloxy groups of the inventive polysiloxane compounds it is assumed that a strong hydrogen-bonding property derived from the directional nature of a hydrogen bond is generated to give high strength. That is, the inventive polysiloxane compound has high compatibility with a hydrophilic monomer, can provide desirable strength in the derived (co)polymer, and further do not cause unexpected increases in hardness or unexpected decreases in flexibility.

In the above formula (1), R¹ represents a methyl group or a hydrogen atom, preferably a methyl group.

"A" represents a group represented by the above formula (2) or (3), "n" represents an integer of 1 to 200, preferably an integer of 4 to 100, and more preferably an integer of 4 to 30. "a" represents an integer of 0 to 10, "b" represents an integer of 0 to 10, "c" represents an integer of 0 to 10, and a+b+c represents 2 or more. Further, in the formula (3), it is preferable that "a" represents 1, "b" represents 1, and "c" represents 0.

In the above formula (2) or (3), R's each independently represent a monovalent hydrocarbon group having 1 to 6 carbon atoms. The monovalent hydrocarbon groups include alkyl groups such as a methyl group, an ethyl group, a propyl group, a n-butyl group, a t-butyl group, a pentyl group, and a hexyl group; cycloalkyl groups such as a cyclopentyl group and a cyclohexyl group; aryl groups such as a phenyl group; etc. R is preferably an alkyl group having 1 to 4 carbon atoms, more preferably a methyl group or a butyl group.

### Method for Manufacturing Polysiloxane Compound

Hereinafter, a method for manufacturing polysiloxane compound represented by the above formula (1) is described.

A method for manufacturing the inventive polysiloxane compound includes a step of obtaining the compound represented by the above formula (1) by a hydrosilylation of a compound (an unsaturated compound) represented by the following formula (4) having an unsaturated group at the terminal and a hydrogensiloxane compound represented by the following formula (5) or (6) in the presence of a catalyst.

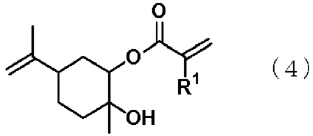

R¹ represents as described above.

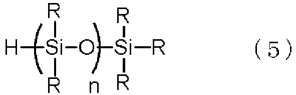

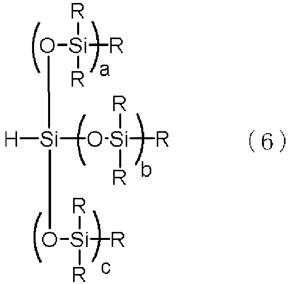

R, "n", "a", "b", and "c" represent as described above.

The method for manufacturing the inventive polysiloxane compound is featured to use a compound (formula (4)) having an unsaturated bond at the terminal and a cycloaliphatic hydrocarbon group substituted with a tertiary hydroxyl group, as a raw material. In the method for manufacturing the inventive polysiloxane compound, because the hydroxyl group contained in the raw material compound represented by the above formula (4) is a tertiary hydroxyl group existing on a cyclohexane ring, an undesirable side reaction by the hydroxyl group in the hydrosilylation reaction can be suppressed. Thereby, it is possible to obtain the inventive polysiloxane compound with high purity.

The above hydrosilylation reaction may be carried out according to a conventionally known method. In the present invention, the hydrogensiloxane compound represented by the formula (5) or (6) may be reacted by adding the unsaturated compound represented by the formula (4) in an amount of, for example, 1 molar equivalent or more. The reaction temperature is not particularly limited, but is preferable at a certain level not to exceed the boiling point of the solvent used. For example, it is better to carry out at a temperature of about 0°C to about 120°C. The hydrosilylation reaction may be carried out in the presence of a solvent, a hydrosilylation catalyst, or a stabilizer. A solvent, a hydrosilylation catalyst, and a stabilizer may be conventionally known ones and are not particularly limited.

In the above hydrosilylation reaction, the unsaturated compound is preferably added in an amount of 1 molar equivalent or more based on the hydrogensiloxane compound, more preferably 1.0 to 3.0 molar equivalents, further preferably 1.1 to 2.0 molar equivalents, particularly preferably 1.2 to 1.5 molar equivalents. By adding 1 molar equivalent or more of the unsaturated compound to the hydrogensiloxane compound, the remaining of the hydrogensiloxane compound and side reactions can be prevented. Although there is no upper limit, it is preferable 3.0 molar equivalents or less from the viewpoint of yield and economical efficiency.

### (Hydrosilylation Catalyst)

The hydrosilylation catalysts are preferably, for example, noble metal catalysts, especially platinum catalysts derived from chloroplatinic acid. In particular, it is preferable to completely neutralize the hydrogen ions of chloroplatinic acid with sodium bicarbonate to improve the stability of the platinum catalyst. For example, a complex (Karstedt catalyst) of 1,1,3,3-tetramethyl-1,3-divinyldisiloxane and chloroplatinic acid neutralized with sodium bicarbonate is more preferable.

The amount of the hydrosilylation catalyst added may be sufficient in a catalytic amount to proceed the above hydrosilylation reaction. For example, a complex of 1,1,3,3-tetramethyl-1,3-divinyldisiloxane and chloroplatinic acid neutralized with sodium bicarbonate may be used in an amount of 1 ppm to 80 ppm in terms of platinum, based on the mass of the hydrogensiloxane compound represented by the formula (5) or (6).

### (Solvent)

Examples of solvents include glycol ethers solvents such as methyl cellosolve, ethyl cellosolve, isopropyl cellosolve, butyl cellosolve, propylene glycol monomethyl ether, diethylene glycol monomethyl ether, triethylene glycol monomethyl ether, polyethylene glycol monomethyl ether, ethylene glycol dimethyl ether, diethylene glycol dimethyl ether, triethylene glycol dimethyl ether, and polyethylene glycol dimethyl ether: ester solvents such as ethyl acetate, butyl acetate, amyl acetate, ethyl lactate, and methyl benzoate; aliphatic hydrocarbon solvents such as linear hexane, linear heptane, and linear octane; alicyclic hydrocarbon solvents such as cyclohexane and ethylcyclohexane; ketone solvents such as acetone, methyl ethyl ketone, and methyl isobutyl ketone; aromatic hydrocarbon solvents such as benzene, toluene, and xylene; petroleum solvents; and alcoholic solvents such as methyl alcohol, ethyl alcohol, linear propyl alcohol, isopropyl alcohol, linear butyl alcohol, isobutyl alcohol, tert-butyl alcohol, ethylene glycol, diethylene glycol, triethylene glycol, tetraethylene glycol, and polyethylene glycol. One of the above solvents may be used alone or two or more thereof may be used in combination.

### (Stabilizer)

Examples of the stabilizer include phenolic antioxidants, phosphorus antioxidants, amine antioxidants, sulfur-based antioxidants, etc. Examples of phenolic antioxidants include, but are not particularly limited to, a compound or the like selected from the group consisting of p-methoxyphenol, di-tert-butyl-p-cresol, pyrogallol, tert-butylcatechol, 4,4-thiobis(3-methyl-6-tert-butylphenol), 2,2'-methylenebis(4-methyl-6-t-butylphenol), phenolic resins, and cresol resins. Examples of phosphorous antioxidants include, but are not particularly limited to, tris[2-[[2,4,8,10-tetrakis(1,1-dimethylethyl)dibenzo[d,f] [1,3,2]dioxaphosphepin-6-yl]oxy]ethyl]amine, tris[2-[(4,6,9,11-tetra-tert-butyldibenzo[d,f][1,3,2]dioxaphosphepin-2-yl)oxy]ethyl]amine, ethylbis(2,4-di-tert-butyl-6-methylphenyl) phosphite, etc. Examples of amine antioxidant include, but are not particularly limited to, tri- or tetra-C1-3 alkylpiperidine or derivatives thereof, bis(2,2,6,6-tetramethyl-4-piperidyl)oxalate, 1,2-bis(2,2,6,6-tetramethyl-4-piperidyloxy)ethane, phenylnaphthylamine, N,N'-diphenyl-1,4-phenylenediamine, N-phenyl-N'-cyclohexyl-1, 4-phenylenediamine, etc. Examples of sulfur-based antioxidant include, but are not particularly limited to, dilaurylthiodipropionate, distearylthiodipropionate, etc. One of the stabilizers may be used alone or two or more thereof may be used in combination.

In the above hydrosilylation reaction, the end point of the reaction can be confirmed according to a conventionally known method. For example, this can be confirmed by the disappearance of the peak of the raw material compound by thin layer chromatography (TLC), high performance liquid chromatography (HPLC), gas chromatography (GC), etc.

After the reaction is completed, the resultant product may be purified according to conventionally known methods. For example, the product can be isolated by washing the organic layer with water and then removing the solvent. Alternatively, it is possible to use reduced pressure distillation, activated carbon treatment, etc.

For an example of the method for manufacturing the inventive polysiloxane compound, 1 molar equivalent of a hydrogensiloxane compound represented by the formula (5) or (6) and 1.3 molar equivalents of an unsaturated compound represented by the above formula (4), 10 ppm of, in terms of platinum based on the mass of the polysiloxane compound, toluene solution (platinum content 0.5 wt%) of a complex of chloroplatinic acid neutralized with sodium bicarbonate and vinylsiloxane, and 100 mass% of toluene based on mass of hydrogensiloxane compound are mixed and subjected to heat agitation under a nitrogen atmosphere at 80°C. The reaction is completed for about 2 hours. The progress of the reaction can be confirmed by monitoring unsaturated compounds or generated compounds with GC measurement etc. After completion of the reaction, 100 mass% of n-hexane based on the hydrogensiloxane compound is added to the mixture; the organic layer is washed with methanol-water (methanol:water = 4:1); the solvent present in the organic layer and the unreacted raw material is distilled off under reduced pressure; and then a polysiloxane compound represented by the above formula (1) can be obtained.

### Polymer

The inventive polysiloxane compound can provide a polymer containing a repeating unit derived from (addition) polymerization of a (meth)acryloxy group of the polysiloxane compound. The inventive polysiloxane compound has good compatibility with other compounds (hereinafter, referred to as the polymerizable monomers or the hydrophilic monomers) having a polymerizable group such as a (meth)acryloxy group. Therefore, a colorless and transparent copolymer can be obtained by copolymerizing with a polymerizable monomer. The polymerization can also be carried out by using a single compound alone.

As for the blending ratio of the inventive polysiloxane compound in manufacturing of the copolymer containing a repeating unit derived from polymerization of the inventive polysiloxane compound and the other copolymerizable (hydrophilic) monomer, the mass ratio of the repeating unit derived from the inventive polysiloxane compound is preferably 10 mass% or more based on the total mass of the polymer. More in detail, a repeating unit derived from the (addition) polymerization of the (meth)acryloxy group of the inventive polysiloxane compound is contained in amount of preferably 10 to 80 parts by mass, more preferably 10 to 60 parts by mass, with respect to 100 parts by mass of the total of the inventive polysiloxane compound and the polymerizable (hydrophilic) monomers combined. When the above repeating unit is contained in 10 mass% or more, the properties of the inventive polysiloxane compound are likely to be exhibited.

Examples of the polymerizable monomers include acrylic monomers such as (meth)acrylic acid, methyl (meth)acrylate, ethyl (meth)acrylate, (poly)ethylene glycol dimethacrylate, polyalkylene glycol mono(meth)acrylate, polyalkylene glycol monoalkyl ether (meth) acrylate, trifluoroethyl (meth)acrylate, 2-hydroxyethyl (meth)acrylate, 2,3-dihydroxypropyl (meth) acrylate; acrylic acid derivative such as N,N-dimethylacrylamide, N,N-diethylacrylamide, N-acryloylmorpholine, N-methyl(meth)acrylamide; N-vinylpyrrolidone etc., other unsaturated aliphatic or aromatic compounds such as crotonic acid, cinnamic acid, vinylbenzoic acid; and siloxane monomer having a polymerizable group such as (math)acrylic groups. One of these may be used alone or two or more thereof may be used in combination.

Copolymerization of the inventive polysiloxane compound and the other polymerizable monomers described above may be carried out by a conventionally known method. For example, known polymerization initiators such as thermal polymerization initiators or photopolymerization initiators can be used. Examples of the polymerization initiators include 2-hydroxy-2-methyl-1-phenyl-propan-1-one, azobisisobutyronitrile, azobisdimethylvaleronitrile, benzoyl peroxide, tert-butyl hydroperoxide, cumene hydroperoxide, and 2,2'-azobis(2-methylpropionamidine) dihydrochloride. One of these polymerization initiators can be used alone or two or more thereof can be used in a mixture. The amount of the polymerization initiator to be blended is preferably 0.001 to 2 parts by mass, more preferably 0.01 to 1 part by mass, based on 100 parts by mass of the total polymerization components.

A polymer containing a repeating unit derived from polymerization of a (meth)acryloxy group of the inventive polysiloxane compound has excellent hydrophilicity. Further, the hydrogel obtained from the polymer has high transparency and high strength. Furthermore, a medical material can also be obtained from the polymer. Therefore, the inventive polysiloxane compounds are suitable for manufacturing medical materials such as ophthalmic devices, contact lenses, intraocular lenses, and artificial corneas. The method for manufacturing medical materials using the polymer is not particularly limited, and any conventionally known method for manufacturing medical materials may be followed. For example, when forming a shape of lens such as contact lens and intraocular lens, it is possible to use a cutting and processing method, a molding method, etc.

### EXAMPLE

Hereinafter, the present invention will be described in detail with reference to Examples and Comparative Examples. However, the present invention is not limited thereto.

In the following examples, ¹H-NMR analysis was carried out using ECS400 manufactured by JEOL with heavy chloroform as the measurement solvent.

Gas chromatograph (GC) measurements were all performed under the following conditions.

Apparatus: Gas chromatography (FID detector) by Agilent Technologies, Inc.

Capillary column: J&W HP-5ms, manufactured by Agilent Technologies, Inc.
(Inner diameter: 0.25 mm x length: 30 m x film thickness: 0.25 µm)
Temperature rise program: 50°C (5 min) → 10°C/min → 250°C (hold)
Injection port temperature: 250°C
Detector temperature: FID 300°C
Carrier gas: Helium (1.0 ml/min)
Split ratio: 50:1
Injection amount: 1 µL

Compounds used in the following Examples and Comparative Examples are shown below.

MHMVCH: Compound represented by the formula (7) 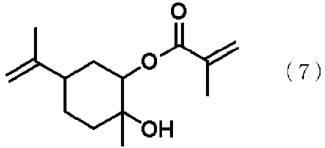 AHPM: Isomer mixture of compounds represented by the formula (8A) or (8B) 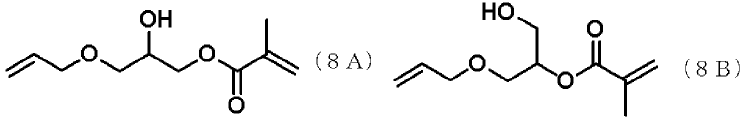 C-SiGMA: Isomer mixture of compounds represented by the formula (9A) or (9B)

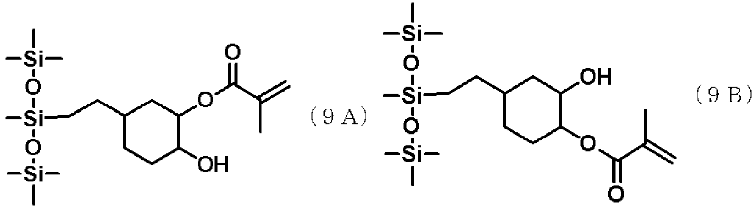

### Synthesis Example 1

50.0 g of a hydrogensiloxane compound represented by the following formula (10) and 42.6 g of MHMVCH (molar ratio of unsaturated compound to hydrogensiloxane compound = 1.3), 50.0 g of toluene, and 0.03 g of toluene solution (platinum content 0.5 wt%) of a complex of chloroplatinic acid neutralized with sodium bicarbonate and vinylsiloxane were put into a 300 mL three-neck eggplant flask equipped with a Dimroth condenser and a thermometer under a nitrogen atmosphere, and the mixture was heated to 80°C and aged for 4 hours. After completion of the reaction, the mixture was added with 50.0 g of n-hexane and washed 5 times with an aqueous methanol solution (methanol:water = 4:1), and the solvent and the unreacted raw materials were distilled off under reduced pressure at an internal temperature of 80°C to obtain a colorless and transparent liquid. The yield was 72.5 g. It was confirmed by ¹H-NMR that the resultant was a compound represented by the formula (10A). By GC measurement, the purity of the target product was calculated based on area% and found to be 92.3%.

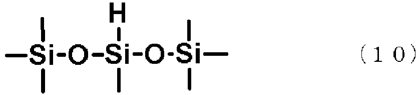

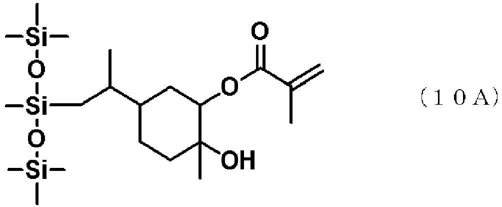

Data of ¹H-NMR were as follows.

-0.10-0.20 ppm(21H), 0.30 ppm(1H), 0.54 ppm(1H), 0.88 ppm(3H), 1.17 ppm(2.5H), 1.30-1.80 ppm(9H), 1.90-2.00 ppm(3H), 2.20-2.30 ppm(0.5H), 4.08 ppm(0.4H), 4.84 ppm(0.6H), 5.48-5.58 ppm(1H), 6.05-6.12 ppm(1H).

### Synthesis Example 2

A colorless transparent liquid was obtained in the same manner as in Synthesis Example 1 except that the hydrogensiloxane compound represented by the formula (10) in Synthesis Example 1 was replaced with 50.0 g of the hydrogensiloxane compound represented by the following formula (11) and 17.5 g of MHVCH (molar ratio of unsaturated compound to hydrogensiloxane compound = 1.3). The yield was 61.2 g. It was confirmed by ¹H-NMR that the resultant was a compound represented by the following formula (11A). By GC measurement, the purity of the target product was calculated based on area% and found to be 93.2%.

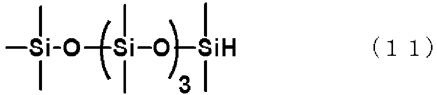

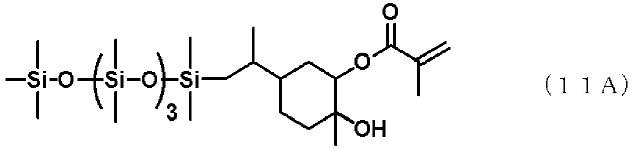

Data of ¹H-NMR were as follows.

-0.10-0.20 ppm(33H), 0.30 ppm(1H), 0.54 ppm(1H), 0.88 ppm(3H), 1.17 ppm(2.5H), 1.30-1.80 ppm(9H), 1.90-2.00 ppm(3H), 2.20-2.30 ppm(0.5H), 4.08 ppm(0.4H), 4.84 ppm(0.6H), 5.48-5.58 ppm(1H), 6.05-6.12 ppm(1H).

### Synthesis Example 3

A colorless transparent liquid was obtained in the same manner as in Synthesis Example 1 except that the hydrogensiloxane compound represented by the formula (10) in Synthesis Example 1 was replaced with 50.0 g of the hydrogensiloxane compound represented by the following formula (12) and 10.5 g of MHVCH (molar ratio of unsaturated compound to hydrogensiloxane compound = 1.3). The yield was 48.8 g. It was confirmed by ¹H-NMR that the resultant was a compound represented by the following formula (12A).

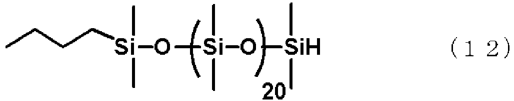

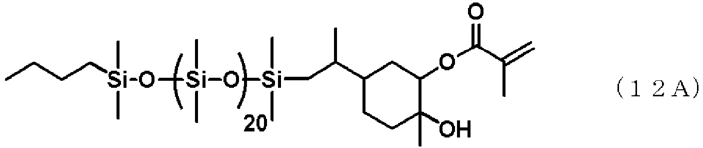

Data of ¹H-NMR were as follows.

-0.10-0.20 ppm(132H), 0.30 ppm(1H), 0.40 ppm(2H), 0.54 ppm(1H), 0.88 ppm(6H), 1.17 ppm(2.5H), 1.30-1.80 ppm(13H), 1.90-2.00 ppm(3H), 2.20-2.30 ppm(0.5H), 4.08 ppm(0.4H), 4.84 ppm(0.6H), 5.48-5.58 ppm(1H), 6.05-6.12 ppm(1H).

### Comparative Example 1

A colorless transparent liquid was obtained in the same manner as in Synthesis Example 1 except that MHMVCH in Synthesis Example 2 was replaced with 40.8g of AHPM (molar ratio of unsaturated compound to hydrogensiloxane compound = 1.3). The yield was 72.5 g. It was confirmed by ¹H-NMR that the resultant was isomer mixture of compounds represented by the following formulae (13A) and (13B). By GC measurement, the purity of the target product was calculated based on area% and found to be 89.3%.

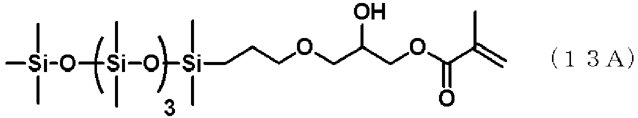

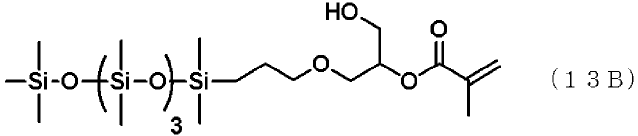

As shown in Synthesis Example 2 and Comparative Synthesis Example 1, the unsaturated group-containing compound (MHMVCH) containing a tertiary hydroxyl group on the cyclohexane ring inhibits the side reaction accompanied with the hydrosilylation reaction during the addition reaction with hydrogensiloxane, and therefore, polysiloxane compounds can be manufactured with higher purity than the unsaturated group-containing compounds (AHPM) having a primary hydroxyl group and a secondary hydroxyl group.

### Examples 1 to 4 and Comparative Examples 1 to 3 Example of Manufacturing Hydrogel

Each compound obtained in Synthesis Examples 1 to 3 above, each compound obtained in Comparative Synthesis Example 1 above, C-SiGMA represented by the above formula, 3-[tris(trimethylsiloxy)silyl]propyl methacrylate (TRIS) represented by the following formula, 2-hydroxyethyl methacrylate (HEMA), N,N-dimethylacrylamide (DMA), ethylene glycol dimethacrylate (EGDMA), and Irgacure 1173 (IRG1173) were mixed according to the composition and blending ratio shown in Table 1 or 2, and stirred until being homogeneous.

After stirring, the mixture was subjected to bubbling with N₂ for 5 minutes, deaerated sufficiently, and then sealed in a polypropylene mold. The mixture was cured by UV irradiation using a high-pressure mercury lamp. After being cured, the cured product was cleaned by being immersed in isopropanol, 50% isopropanol aqueous solution, and deionized water in this order for a few seconds respectively, to obtain a hydrogel film. Each physical property of the obtained film was measured according to the method shown below. The results are shown in Tables 1 and 2.

TRIS: 3-[tris(trimethylsiloxy)silyl]propyl methacrylate

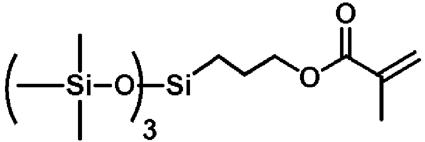

### Equilibrium Moisture Content

After the film was immersed in deionized water at 25°C for 48 hours, the water on the surface was wiped off and the mass of the hydrated film was measured. Next, the hydrated film was dried in an oven at 50°C for 48 hours and in an oven at 25°C for 24 hours, and then the mass of the dried film was measured. Equilibrium moisture content was calculated using the following formula. 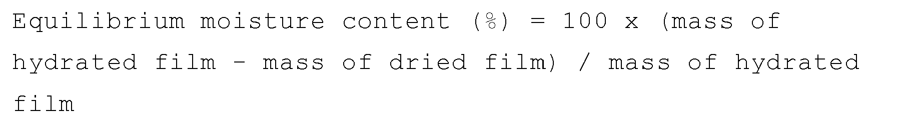 Equilibrium moisture content (%) = 100 x (mass of hydrated film - mass of dried film) / mass of hydrated film

### Transparency

After the film was immersed in deionized water at 25°C for 48 hours, the water on the surface was wiped off to produce a hydrated film. The appearance was visually observed and evaluated according to the following criteria.
A: Uniform and clear
B: Non-uniform or cloudy

### Modulus of Elasticity (Young's elasticity modulus) and Elongation Rate

After the film was immersed in deionized water at 25°C for 48 hours, the water on the surface was wiped off to produce a hydrated film. The Young's elasticity modulus of the hydrated film was measured using an Instron 5943. A film cut to 0.8 cm x 4.0 cm was measured with a 50 N load cell at a head speed of 1 cm/min. The slope of the initial part (a part in straight line) of a stress-strain curve with obtained stress on the vertical axis and strain on the horizontal axis was calculated and defined as Young's elasticity modulus (MPa). The elongation rate when the film was broken was defined as the maximum elongation rate (%).

**Table 1**

| | | Example 1 | Example 2 | Example 3 | Example 4 |
|---|---|---|---|---|---|
| Polysiloxane compound | (10A) | 50 | 0 | 0 | 0 |
| | (11A) | 0 | 20 | 50 | 0 |
| | (12A) | 0 | 0 | 0 | 50 |
| Comparative compound | (13A) (13B) | 0 | 0 | 0 | 0 |
| | C-SiGMA | 0 | 0 | 0 | 0 |
| | TRIS | 0 | 30 | 0 | 0 |
| Polymerizable monomer | HEMA | 10 | 10 | 10 | 10 |
| | DMA | 37 | 37 | 37 | 37 |
| | EGDMA | 2 | 2 | 2 | 2 |
| | IRG1173 | 1 | 1 | 1 | 1 |
| Evaluation result | Equilibrium moisture content (%) | 49 | 46 | 50 | 46 |
| | Transparency | A | A | A | A |
| | Modulus of elasticity (MPa) | 0.47 | 0.43 | 0.45 | 0.43 |
| | Maximum elongation rate (%) | 510 | 490 | 510 | 530 |

**Table 2**

| | | Comparative Example 1 | Comparative Example 2 | Comparative Example 3 |
|---|---|---|---|---|
| Polysiloxane compound | (10A) | 0 | 0 | 0 |
| | (11A) | 0 | 0 | 0 |
| | (12A) | 0 | 0 | 0 |
| Comparative compound | (13A) (13B) | 0 | 0 | 50 |
| | C-SiGMA | 0 | 50 | 0 |
| | TRIS | 50 | 0 | 0 |
| Polymerizable monomer | HEMA | 10 | 10 | 10 |
| | DMA | 37 | 37 | 37 |
| | EGDMA | 2 | 2 | 2 |
| | IRG1173 | 1 | 1 | 1 |
| Evaluation result | Equilibrium moisture content (%) | 42 | 46 | 51 |
| | Transparency | B | A | A |
| | Modulus of elasticity (MPa) | 0.43 | 0.61 | 0.55 |
| | Maximum elongation rate (%) | 230 | 370 | 390 |

As shown in Table 2, the hydrogel using TRIS as a comparative compound has a problem in terms of transparency (Comparative Example 1). Furthermore, the hydrogels using the formulae (13A) (13B) and C-SiGMA as comparative compounds have high modulus of elasticity and low maximum elongation rate (Comparative Examples 2 and 3). On the other hand, as shown in Table 1, the hydrogel using the inventive polysiloxane compound has excellent transparency, and excellent modulus of elasticity and maximum elongation rate. That is, the hydrogel using the inventive polysiloxane compound provides a medical material having beneficial hydrophilicity and sufficient strength and flexibility.

### Industrial Applicability

The inventive polysiloxane compound provides a hydrogel with excellent hydrophilicity and strength. The inventive polysiloxane compounds are useful as monomers for manufacturing medical materials such as ophthalmic devices, contact lenses, intraocular lenses, artificial corneas, and spectacle lenses.

It should be noted that the present invention is not limited to the above-described embodiments. The above embodiments are just examples, and any examples that have substantially the same feature and demonstrate the same functions and effects as those in the technical concept disclosed in claims of the present invention are included in the technical scope of the present invention.

## Claims

1. A polysiloxane compound comprising a single cycloaliphatic hydrocarbon group having 8 to 20 carbon atoms per molecule, wherein
the polysiloxane compound has a (meth)acryloxy group and a tertiary hydroxyl group on an aliphatic ring of the cycloaliphatic hydrocarbon group.

2. The polysiloxane compound according to claim 1, wherein the polysiloxane compound is represented by the following formula (1), 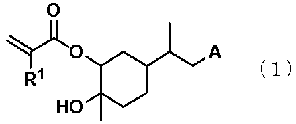 wherein, R¹ represents a methyl group or a hydrogen atom, and "A" represents a group represented by the following formulae (2) or (3), 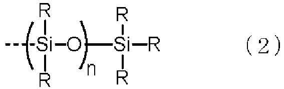 wherein, R's each independently represent a monovalent hydrocarbon group having 1 to 6 carbon atoms, "n" represents an integer of 1 to 200, and a broken line represents an atomic bonding, 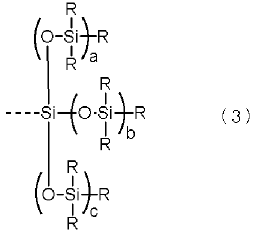 wherein, R's represent as described above, "a"
represents an integer of 0 to 10, "b" represents an integer of 0 to 10, "c" represents an integer of 0 to 10, a+b+c represents 2 or more, and a broken line represents an atomic bonding.

3. The polysiloxane compound according to claim 2, wherein
"A" in the formula (1) is represented by the formula (2) and "n" in the formula (2) represents an integer of 4 to 100.

4. The polysiloxane compound according to claim 2, wherein
"A" in the formula (1) is represented by the formula (3) and in the formula (3) "a" represents 1, "b" represents 1, and "c" represents 0.

5. The polysiloxane compound according to any one of claims 2 to 4, wherein
R¹ in the formula (1) represents a methyl group.

6. The polysiloxane compound according to any one of claims 2 to 5, wherein
R's in the formula (2) or (3) each independently represent a methyl group or a butyl group.

7. A polymer comprising a repeating unit derived from polymerization of a (meth)acryloxy group contained in the polysiloxane compound according to any one of claims 1 to 6.

8. The polymer according to claim 7, wherein
a mass ratio of the repeating unit to the entire polymers is 10 mass % or more.

9. A hydrogel comprising the polymer according to claim 7 or 8.

10. A medical material comprising the polymer according to claim 7 or 8.

11. A method for manufacturing a polysiloxane compound represented by the following formula (1), 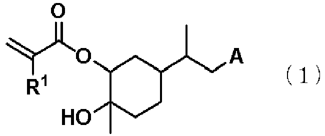 wherein, R¹ represents a methyl group or a hydrogen atom, and "A" represents a group represented by the following formula (2) or (3), 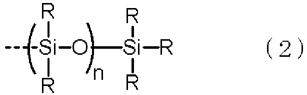 wherein, R's each independently represent a monovalent hydrocarbon group having 1 to 6 carbon atoms, "n" represents an integer of 1 to 200, and a broken line represents an atomic bonding, 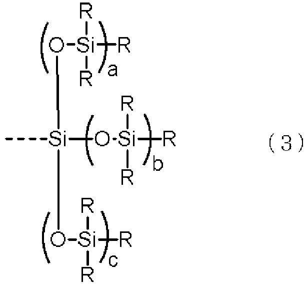
wherein, R's represent as described above, "a" represents an integer of 0 to 10, "b" represents an integer of 0 to 10, "c" represents an integer of 0 to 10, a+b+c represents 2 or more, and a broken line represents an atomic bonding,
wherein the method for manufacturing the polysiloxane compound comprises a step of obtaining the polysiloxane compound represented by the formula (1) by a hydrosilylation of a compound represented by the following formula (4) having an unsaturated group at the terminal, and a hydrogensiloxane compound represented by the following formula (5) or (6), 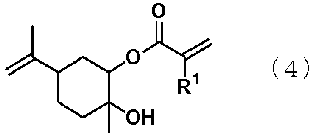
wherein, R¹ represents as described above, 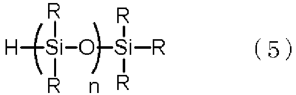 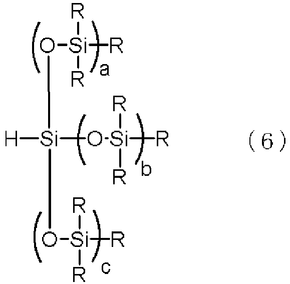
wherein, R, "n", "a", "b", and "c" represent as described above.

## Patentansprüche

1. Polysiloxanverbindung, umfassend eine einzelne cycloaliphatische Kohlenwasserstoffgruppe mit 8 bis 20 Kohlenstoffatomen pro Molekül, wobei
die Polysiloxanverbindung eine (Meth)acryloxygruppe und eine tertiäre Hydroxylgruppe an einem aliphatischen Ring der cycloaliphatischen Kohlenwasserstoffgruppe aufweist.

2. Polysiloxanverbindung gemäß Anspruch 1, wobei die Polysiloxanverbindung durch die folgende Formel (1) repräsentiert wird: 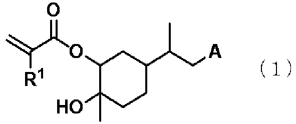 wobei R¹ eine Methylgruppe oder ein Wasserstoffatom repräsentiert und "A" eine durch die folgenden Formeln (2) oder (3) dargestellte Gruppe repräsentiert, 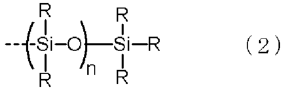 wobei die R's jeweils unabhängig voneinander eine einwertige Kohlenwasserstoffgruppe mit 1 bis 6 Kohlenstoffatomen repräsentieren, "n" eine ganze Zahl von 1 bis 200 repräsentiert und eine gestrichelte Linie eine atomare Bindung repräsentiert, 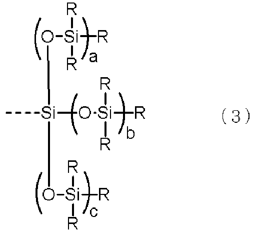 wobei die R's die oben beschriebene Bedeutung haben, "a" eine ganze Zahl von 0 bis 10 repräsentiert, "b" eine ganze Zahl von 0 bis 10 repräsentiert, "c" eine ganze Zahl von 0 bis 10 repräsentiert, a+b+c 2 oder mehr repräsentiert und eine gestrichelte Linie eine atomare Bindung repräsentiert.

3. Polysiloxanverbindung gemäß Anspruch 2, wobei
"A" in der Formel (1) durch die Formel (2) repräsentiert wird und "n" in der Formel (2) eine ganze Zahl von 4 bis 100 repräsentiert.

4. Polysiloxanverbindung gemäß Anspruch 2, wobei
"A" in der Formel (1) durch die Formel (3) repräsentiert wird und in der Formel (3) "a" 1, "b" 1 und "c" 0 repräsentiert.

5. Polysiloxanverbindung gemäß einem der Ansprüche 2 bis 4, wobei
R¹ in der Formel (1) eine Methylgruppe repräsentiert.

6. Polysiloxanverbindung gemäß einem der Ansprüche 2 bis 5, wobei
die R's in der Formel (2) oder (3) jeweils unabhängig voneinander eine Methylgruppe oder eine Butylgruppe repräsentieren.

7. Polymer, das eine sich wiederholende Einheit umfasst, die durch Polymerisation einer in der Polysiloxanverbindung gemäß einem der Ansprüche 1 bis 6 enthaltenen (Meth)acryloxygruppe abgeleitet ist.

8. Polymer gemäß Anspruch 7, wobei
das Massenverhältnis der sich wiederholenden Einheit zum gesamten Polymer 10 Masse% oder mehr beträgt.

9. Hydrogel, das das Polymer gemäß Anspruch 7 oder 8 umfasst.

10. Medizinisches Material, das das Polymer gemäß Anspruch 7 oder 8 umfasst.

11. Verfahren zur Herstellung einer Polysiloxanverbindung, die durch die folgende Formel (1) repräsentiert wird, 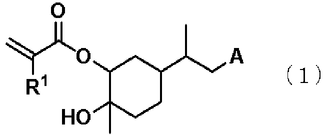 wobei R¹ eine Methylgruppe oder ein Wasserstoffatom repräsentiert und "A" eine durch die folgende Formel (2) oder (3) dargestellte Gruppe repräsentiert, 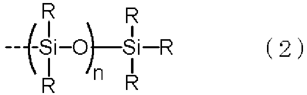 wobei die R's jeweils unabhängig voneinander eine einwertige Kohlenwasserstoffgruppe mit 1 bis 6 Kohlenstoffatomen repräsentieren, "n" eine ganze Zahl von 1 bis 200 repräsentiert und eine gestrichelte Linie eine atomare Bindung repräsentiert, 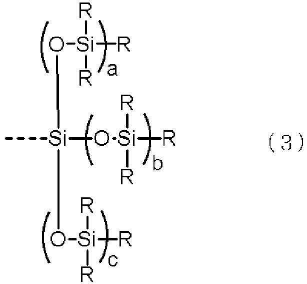
wobei die R's die oben beschriebene Bedeutung haben, "a" eine ganze Zahl von 0 bis 10 repräsentiert, "b" eine ganze Zahl von 0 bis 10 repräsentiert, "c" eine ganze Zahl von 0 bis 10 repräsentiert, a+b+c 2 oder mehr repräsentiert und eine gestrichelte Linie eine atomare Bindung repräsentiert.
wobei das Verfahren zur Herstellung der Polysiloxanverbindung einen Schritt umfasst, bei dem die durch die Formel (1) repräsentierte Polysiloxanverbindung durch eine Hydrosilylierung einer Verbindung, die durch die folgende Formel (4) mit einer ungesättigten Gruppe am Ende und einer Hydrogensiloxanverbindung, die durch die folgende Formel (5) oder (6) repräsentiert wird, erhalten wird, 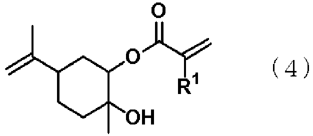
wobei R¹ die oben beschriebene Bedeutung hat, 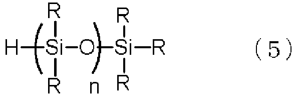 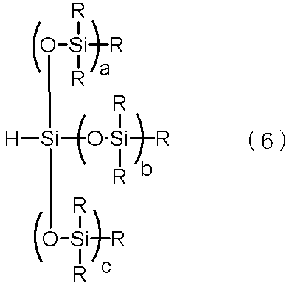
wobei R, "n", "a", "b" und "c" die oben beschriebenen Bedeutungen haben.

## Revendications

1. Composé polysiloxane comprenant un seul groupe hydrocarbure cycloaliphatique comportant de 8 à 20 atomes de carbone par molécule, dans lequel
le composé polysiloxane comporte un groupe (méth)acryloxy et un groupe hydroxyle tertiaire sur un cycle aliphatique du groupe hydrocarbure cycloaliphatique.

2. Composé polysiloxane selon la revendication 1, le composé polysiloxane est représenté par la formule (1) suivante: 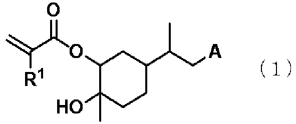 dans laquelle R¹ représente un groupe méthyle ou un atome d'hydrogène, et « A » représente un groupe représenté par les formules (2) ou (3) suivantes: 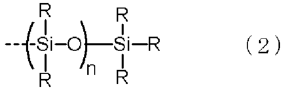 dans laquelle chaque R' représente indépendamment un groupe hydrocarbure monovalent comportant de 1 à 6 atomes de carbone, « n » représente un nombre entier compris entre 1 et 200, et une ligne pointillée représente une liaison atomique, 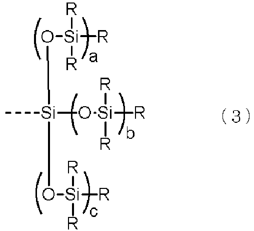 dans laquelle chaque R' est tel que décrit ci-dessus, «a» représente un nombre entier compris entre 0 et 10, «b» représente un nombre entier compris entre 0 et 10, «c» représente un nombre entier compris entre 0 et 10, a + b + c est supérieur ou égal à 2, et une ligne pointillée représente une liaison atomique.

3. Composé polysiloxane selon la revendication 2, dans lequel
dans la formule (1), « A » est représenté par la formule (2) et « n », dans la formule (2), représente un nombre entier compris entre 4 et 100.

4. Composé polysiloxane selon la revendication 2, dans lequel
dans la formule (1), « A » est représenté par la formule (3) et dans la formule (3), « a » représente 1, « b » représente 1 et « c » représente 0.

5. Composé polysiloxane selon l'une quelconque des revendications 2 à 4, dans lequel
dans la formule (1), R¹ représente un groupe méthyle.

6. Composé polysiloxane selon l'une quelconque des revendications 2 à 5, dans lequel
chaque R' dans les formules (2) ou (3) représente, indépendamment, un groupe méthyle ou un groupe butyle.

7. Polymère comprenant un motif de répétition dérivé de la polymérisation d'un groupe (méth)acryloxy contenant dans le composé polysiloxane selon l'une quelconque des revendications 1 à 6.

8. Polymère selon la revendication 7, dans lequel
le rapport massique entre le motif de répétition et l'ensemble des polymères est supérieur ou égal à 10 % en masse.

9. Hydrogel comprenant le polymère selon la revendication 7 ou 8.

10. Matériau médical comprenant le polymère selon la revendication 7 ou 8.

11. Procédé de fabrication d'un composé polysiloxane représenté par la formule (1) suivante: 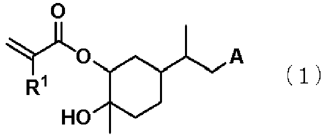 dans laquelle R¹ représente un groupe méthyle ou un atome d'hydrogène, et « A » représente un groupe représenté par la formule (2) ou (3) suivante: 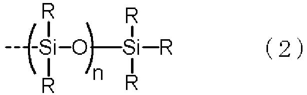 dans laquelle chaque R' représente indépendamment un groupe hydrocarbure monovalent comportant de 1 à 6 atomes de carbone, « n » représente un nombre entier compris entre 1 et 200, et une ligne pointillée représente une liaison atomique, 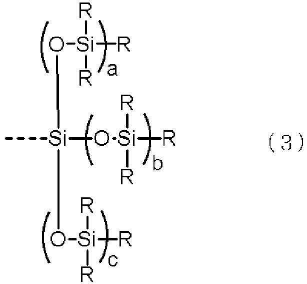
dans laquelle chaque R' comme indiqué ci-dessus, « a » représente un nombre entier compris entre 0 et 10, « b » représente un nombre entier compris entre 0 et 10, « c » représente un nombre entier compris entre 0 et 10, a + b + c est supérieur ou égal à 2, et une ligne pointillée représente une liaison atomique,
le procédé de fabrication du composé polysiloxane comprenant une étape consistant à obtenir le composé polysiloxane représenté par la formule (1) par hydrosilylation d'un composé représenté par la formule (4) suivante, comportant un groupe insaturé en position terminale, et d'un composé hydrogénosiloxane représenté par la formule (5) ou (6) suivante, 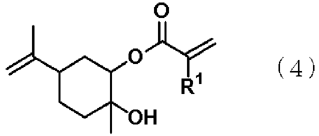
dans laquelle R¹ est tel que décrit ci-dessus, 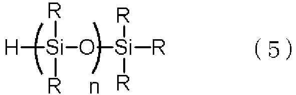 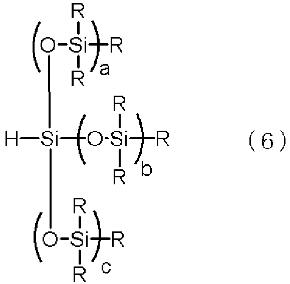
dans laquelle R, « n », « a », « b » et « c » ont les significations indiquées ci-dessus.
